# EUROPÄISCHE PATENTANMELDUNG

(11) **EP 3 141 877 A2**
(43) Veröffentlichungstag der Anmeldung: **15.03.2017**
(21) Anmeldenummer: 16192805.6
(22) Anmeldetag: 21.10.2013
(51) Int. Cl.: G01J 1/46, G08B 13/191, H03F 3/70, H03F 3/45, H03M 3/00, G01J 5/10

(54) **VORRICHTUNG UND VERFAHREN ZUM BETREIBEN PASSIVER INFRAROTSENSOREN**

(30) Priorität: 05.09.2013 DE 102013014810
(62) Teilanmeldung aus: 13821054.7
(71) Anmelder: ELMOS Semiconductor Aktiengesellschaft, 44227 Dortmund (DE)
(72) Erfinder: Suntken, Artur, Gauteng (ZA)
(74) Vertreter: dompatent von Kreisler Selting Werner - Partnerschaft von Patent- und Rechtsanwälten mbB

(57) **Zusammenfassung**

Die Erfindung offenbart eine Vorrichtung und ein Verfahren zum Betreiben eines passiven Infrarot-Detektors (PIR). Dabei wird der passive Infrarot-Detektor (PIR) bei Aufladung und vorzugsweise nicht während der Messung über ein Entladenetzwerk (RG) entladen. Das Entladenetzwerk (RG) und der Infrarot-Detektor (PIR) sind mit einem Analog-zu-Digital-Konverter (ADC) verbunden, der das Signal des Infrarot-Detektors in ein digitales Signal auf dem Ausgangsbus (T) zumindest zeitweise wandelt. Der Ausgang (T) des Analog-zu-Digital-Konverters (ADC) ist auf ein nachfolgendes digitales Filter (DF) geschaltet. Dabei ist die Busbandbreite des Ausgangs (Out) des digitalen Filters (DF) typischerweise grösser als die Busbandbreite des Ausgangs (T) des Analog-zu-Digital-Konverters (ADC).

## Beschreibung

### Einleitung

Bei der vorliegenden Patentanmeldung handelt es sich um eine Teilanmeldung zur europäischen Patentanmeldung 13 821 054.7 mit dem Anmeldetag 21. Oktober 2013, deren Inhalt hiermit durch Bezugnahme zum Gegenstand der Teilanmeldung gehört.

Für die Messung von Infrarot-Strahlung sind verschiedene Verfahren bekannt. Ein wesentliches Sensorprinzip ist die Verwendung von passiven Infrarot-Detektoren (PIR-Detektoren).

Diese zeichnen sich durch eine einfache und kostengünstige Herstellung aus.

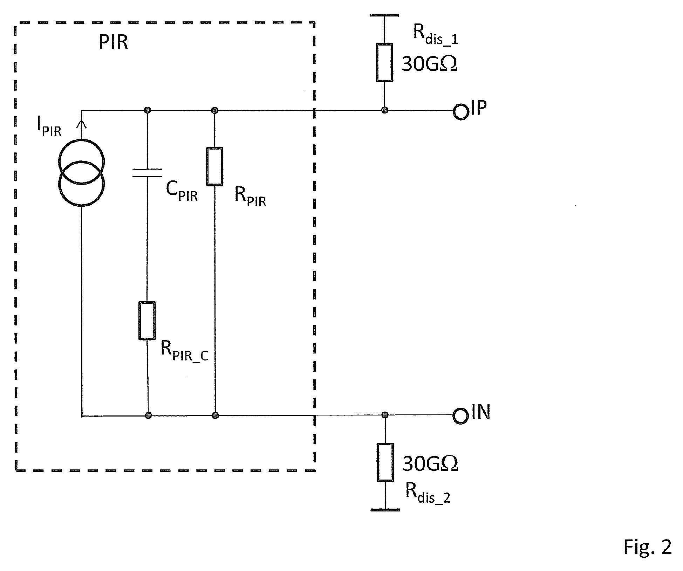

Solche PIR-Detektoren sind Zweipole und können im Ersatzschaltbild durch eine Stromquelle symbolisiert werden, die einen Strom I_{PIR} abhängig von der Änderung der Bestrahlung und damit der Temperatur liefert und der eine Kapazität C_{PIR} parallel geschaltet ist. (Siehe auch Figur 2).

Bei der Auswertung des Signals eines PIR-Sensors treten nun verschiedene Probleme auf:
Zum einen kommt es zu einer Verschiebung des Arbeitspunkts des PIR-Detektors durch eine Selbstaufladung. Zum anderen liefert die Stromquelle I_{PIR} in der Regel nur einen sehr geringen Strom bei einem relativ hohen Innenwiderstand. Dieser Innenwiderstand R_{PIR} ist in Figur 2 gezeigt. Diese Randbedingungen resultieren in der Forderung nach einem großen Dynamikbereich und einem sehr hohen Innenwiderstand für die nachfolgende Verstärker- und Analog-zu-Digital-WandlerSchaltung (Auswerteschaltung).

Durch den hohen Innenwiderstand einer optimalen Auswerteschaltung, können einmal generierte Ladungen jedoch nicht mehr abfließen. Dies kann dazu führen, dass die Schaltung den Arbeitsbereich der Auswerteschaltung verlässt, da diese übersteuert wird.

### Aufgabe der Erfindung

Es ist die Aufgabe der Erfindung, ein Auswerteverfahren und eine hochohmige Messschaltung mit großem Dynamikbereich für die Auswertung des Signals eines PIR-Detektor bereitzustellen, ohne dass es zu einer Übersteuerung durch die Aufladung der Eingänge der PIR-Detektor-Auswerteschaltung kommen kann. Dabei soll die Stromaufnahme minimiert werden.

Diese Aufgabe wird durch eine Vorrichtung nach Anspruch 1 und einen Wandler nach Anspruch 2 gelöst. Einzelne Ausgestaltungen der Erfindung sind Gegenstand der Unteransprüche.

### Beschreibung der Erfindung

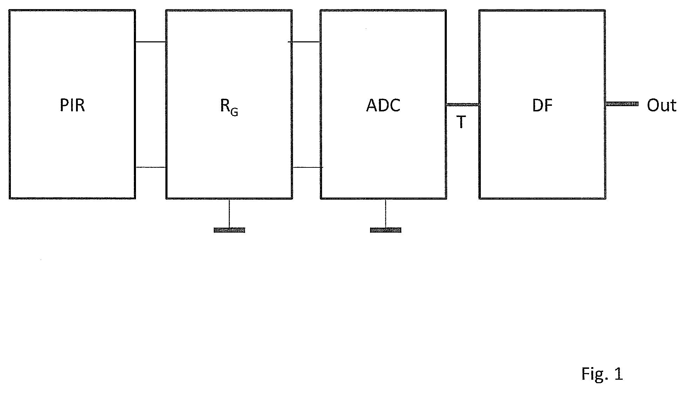

Das erfindungsgemäße System ist in Figur 1 dargestellt. Der passive Infrarot-Detektor (PIR) ist mit seinen zwei Anschlussleitungen an ein Entladenetzwerk R_{G} angeschlossen. Dieses wiederum ist mit einem Analog-zu-Digital-Wandler (ADC) verbunden. Der Ausgang des Analog-zu-Digital-Wandlers ist über einen ersten Bus (T) mit einer ersten Busbreite mit einem digitalen Filter (DF) verbunden, dessen Ausgang Out typischerweise eine größere zweite Busbreite als die erste Busbreite aufweist.

Bei der Entwicklung des erfindungsgemäßen Verfahrens zum Betreiben eines passiven Infrarot-Detektors (PIR) wurde erkannt, dass die Aufladung der Eingänge ein wesentlicher Hinderungsgrund für einen korrekten Betrieb des Systems darstellt. Wie später noch weiter erläutert werden wird, ist der erfindungsgemäße Δ∑-Wandler (ADC) gegen solche Arbeitspunkt-Drift empfindlich. Diese erhöhte Empfindlichkeit des erfindungsgemäßen Δ∑-Wandlers (ADC) ermöglicht jedoch eine besonders effiziente Unterdrückung der Quantisierungsfehler durch den Komparator des erfindungsgemäßen Δ∑-Wandlers (ADC). Daher bilden der erfindungsgemäße Δ∑-Wandler und die Entladung des passiven Infrarot-Detektors mittels des Entladungsnetzwerks (R_{G}) eine erfinderische Einheit. Basierend auf dieser besagten erfinderischen Erkenntnis der fehlerhaften Aufladung der Eingänge, kann die einfachste Lösung dieses Problems dadurch erreicht werden, dass die Eingangsknoten mittels eines Schalters entladen werden, wenn die Spannung am Detektor den Dynamikbereich erreicht. In diesem Fall kann während der Entladung und kurz danach keine Bewertung der Spannung am Detektor vorgenommen werden. Alternativ kann die Entladung durch einen Ableitwiderstand zwischen den Anschlüssen des Sensors oder von den Anschlüssen nach Bezugsmasse (R_{dis_1}, R_{dis_2}) erfolgen. Ein wesentlicher Nachteil dieser Lösung sind die kontinuierliche Bedämpfung des Signals und das Eigenrauschen des Detektors. Außerdem lässt sich nicht mit vertretbarem Aufwand ein Giga-Ohm Widerstand in Low-Cost-CMOS-Technologie realisieren. Im Rahmen der Erfindung wurde erkannt, dass die Entladung des zweiten Ausgangs über den Innenwiderstand der Stromquelle des PIR-Sensors (PIR) nicht zu befriedigenden Ergebnissen führt. Es hat sich gezeigt, dass der Widerstandswert dieser Ableitwiderstände größer als 1 MOhm, vorzugsweise größer als 10 MOhm, vorzugsweise größer als 100 MOhm, und vorzugsweise größer als 1 GOhm oder vorzugsweise größer als 10 GOhm sein sollte. Hierbei hängt der optimale Wert des Ableitwiderstands von dem jeweiligen PIR-Detektor und der jeweiligen Applikation ab und sollte von Fall zu Fall angepasst werden. Bei großen Ladungsverschiebungen durch schnelle Temperaturänderungen (Temperaturschock) wären unverhältnismäßig niedrige Ableitwiderstandswerte nötig, die das zu detektierende Signal nahezu eliminieren.

Hierbei ist klar, dass die Ableitwiderstände des Entladenetzwerks (R_{G}) vorzugsweise gleich und möglichst symmetrisch, in der Fachsprache "matchend", ausgeführt werden sollten. Dabei können diese Ableitwiderstände auch komplexere Schaltungen sein, die nur unter anderem auch die Funktion eines Ableitwiderstands wahrnehmen. Im Rahmen der Erfindung wurde es als vorteilhaft erkannt, die Ableitwiderstände zumindest teilweise als Switched-Capacitor-Schaltung auszuführen. Mit solchen Schaltungen können die ggf. erforderlichen relativ hochohmigen Ableitwiderstände relativ einfach ausgeführt werden. Für den Betrieb eines solchen Switched-Capacitor-Netzwerkes ist es besonders vorteilhaft, wenn dieses mit einem nichtüberlappenden Zweiphasentakt betrieben werden. Natürlich können auch Einphasen- und Mehrphasentakte verwendet werden, die aber in der Regel aufwendiger zu realisieren sind.

Die Anforderung der zuverlässigen Entladung des PIR-Detektors steht im Gegensatz zu einem möglichst hohen Eingangswiderstand der Auswerteschaltung. Im Rahmen der Erfindung wurde daher erkannt, dass es sinnvoll ist, den mittlere Äquivalentwiderstand zumindest der Entladewiderstände des passiven Infrarot-Detektors davon abhängig zu machen, ob gerade eine Messung des Infrarot-Strahlungspotenzials mittels des passiven Infrarotsensors (PIR-Detektor) durchgeführt wird oder nicht. Vor einer Messung werden die Entladewiderstände in einen sehr hochohmigen Zustand geschaltet (Messzustand). Nach dem Ende der Messung werden die Entladewiderstände in einen Zustand geschaltet, der gegenüber dem Messzustand niederohmiger ist.

Alternativ kann die Messung des Ladezustands (Spannung am Detektor) erfolgen und die Größe der Entladewiderstände in Abhängigkeit vom Ladezustand nachgeregelt werden.

Denkbar ist es, dass andere Betriebsbedingungen ebenfalls ein Umschalten erfordern. Beispielsweise ist es denkbar, den PIR-Detektor über einen Schalter definiert zu entladen. In einem solchen Modus wäre ebenfalls ein Hochohmigschalten der Entladewiderstände sinnvoll. Im Extremfall kann der Messzustand also ein komplettes Abkoppeln eines Entladewiderstands bedeuten.

Die Widerstandswerte sind dabei immer an Mittelwerten über mehrere Takte des Betriebstaktes des jeweiligen Switched-Capacitor-Netzwerkes orientiert, sofern ein solches für die Realisierung der Entladewiderstände verwendet wird. Es ist also ein wesentlicher erfinderischer Gedanke, dass die Entladewiderstände des PIR-Detektors in Abhängigkeit von Zuständen des Sensorsystems unterschiedliche Werte annehmen, wobei mindestens die Zustände Messung und keine Messung/Entladung realisiert werden sollten.

Der erfindungsgemäße Δ∑-Wandler (ADC), besteht unter anderem aus einem Differenzverstärker, dessen Stromquelle nicht, wie bei normalen Differenzverstärkern üblich, auf zwei Äste bei symmetrischer Ansteuerung der Transistoren des Differenzverstärkers symmetrisch aufgeteilt ist, sondern der statt des normalerweise vorhandenen gemeinsamen Kontenpunktes für die Transistoren in den Zweigen des Differenzverstärkers und der Betriebsstromquelle einen Stromteiler aufweist, der den Strom in Abhängigkeit von einem externen Steuerwert unterschiedlich aufteilt. Dabei kann angenommen werden, dass die Betriebsstromquelle einen endlichen Innenwiderstand aufweist. Insofern ist auch die Verwendung einer realen Spannungsquelle möglich. Dieser Stromteiler wird in der erfindungsgemäßen Vorrichtung durch eine Widerstandskette realisiert, die an dem einen Ende mit einem Transistor des Differenzverstärkers und an dem anderen Ende mit dem anderen Transistor des Differenzverstärkers verbunden ist. Ein Multiplexer verbindet nun die Betriebsstromquelle in Abhängigkeit von dem externen Steuerwert mit einem Knoten dieser Widerstandskette. Der Stromteiler verhält sich also wie ein digital gesteuertes Potentiometer, dessen Abgriff durch den externen Parameter eingestellt wird.

Hierdurch wird eine unterschiedliche Stromgegenkopplung für die verschiedenen Zweige des Differenzverstärkers eingestellt. Die Stromaufteilung erfolgt dabei derart, dass die Gate-Source-Spannungen der Transistoren sich durch den Spannungsabfall über den Widerständen des Stromteilers so einstellen, dass die Stromsumme durch die beiden Zweige dem dem Strom der Betriebsstromquelle entspricht. Die anderen Anschlüsse der Transistoren sind mit je einem Arbeitswiderstand verbunden. Es hat sich als besonders vorteilhaft herausgestellt, wenn diese Arbeitswiderstände als reale Stromquellen ausgeführt werden, da dann der differentielle Arbeitswiderstand und damit die differentielle Verstärkung besonders groß sind.

Parallel zu diesen Arbeitswiderständen können Kapazitäten geschaltet sein, die das Ausgangssignal integrieren. Die Verwendung von Miller-Kapazitäten ist ebenfalls denkbar. Im Falle des erfindungsgemäßen Δ∑-Wandlers führen diese Kapazitäten die summierende ∑-Funktion des Δ∑-Wandlers durch und eliminieren damit den Quantisierungsfehler durch einen nachgeschalteten Komparator.

Für das Betreiben eines passiven Infrarot-Detektors bietet sich folgendes Verfahren an:
Jeder der Ausgänge des besagten passiven Infrarot-Detektors ist mit dem Steuereingang jeweils eines zugeordneten Eingangstransistors des beschriebenen Differenzverstärkers verbunden. Dabei ist jeweils ein Kontakt jedes dieser Eingangstransistoren mit einem zugehörigen Stromteilerausgang eines steuerbaren Stromteilers verbunden. Der besagte Stromteiler verteilt den Strom einer Referenzstromquelle (I_{ref}) in Abhängigkeit von einem Steuereingang auf die Stromteilerausgänge auf. Die anderen Kontakte der Transistoren sind jeweils mit je einem Arbeitswiderstand, vorzugsweise einem integrierenden Filter oder einer Kapazität (C₁, C₂) verbunden. Die Ausgangswerte dieser integrierenden Filter, d. h. die Arbeitswiderstände und die Kapazitäten, werden nun durch mindestens einen Komparator miteinander verglichen. Dieser erzeugt einen unvermeidlichen Quantisierungsfehler, der durch die im Folgenden beschriebene Rückkopplung minimiert wird. Das Komparatorausgangssignal dieses Komparators ist mit einem digitalen integrierenden Filter verbunden, das neben den besagten Kapazitäten eine zweite Integration durchführt. Der Steuereingang des besagten Stromteilers, der den Strom einer Betriebsstromquelle aufteilt, ist mit dem Ausgang des digitalen integrierenden Filters verbunden. Wird der Stromteiler analog gesteuert, so ist ein Digital-zu-Analog-Wandler (DAC) und/oder ein Signalformatwandler erforderlich, der das Ausgangssignal des digitalen integrierenden Filters in ein geeignetes Format wandelt. In dem hier beschriebenen Beispiel ist dies jedoch nicht erforderlich, da der Multiplexer digital angesteuert werden kann.

Ähnliches kann bei der Anpassung eines digitalen Steuereingangs für den Stromteiler an den digitalen Ausgang des digitalen integrierenden Filters erforderlich sein.

Neben dieser zweiphasigen Version kann auch eine einphasige Version einer Auswerteschaltung Verwendung finden. Hierbei steuert ein Ausgang des passiven Infrarot-Detektors mindestens eine zweite Stromquelle. Diese zweite Stromquelle speist Strom in einen ersten Konten (S_{b}) ein. Dieser erste Knoten (S_{b}) ist über ein integrierendes Filter mit dem Eingang eines Komparators verbunden, der den Signalpegel dieses ersten Knotens (S_{b}) mit einem internen Pegel vergleicht. Der Ausgang dieses Komparators ist wieder mit dem besagten digitalen integrierenden Filter direkt oder indirekt verbunden und steuert dieses somit an. Der Ausgang dieses digitalen integrierenden Filters steuert einen Digital-zu-Analog-Wandler (DAC) an. Der Ausgang dieses Digital-zu-Analog-Wandlers steuert eine erste Stromquelle (I₁), die wiederum ihren Strom ebenfalls in den ersten Knoten (S_{b}) einspeist.

Im Unterschied zur vorausgehenden Version wird in dieser Version ein Anschluss des passiven Infrarot-Detektors mit Masse verbunden, während der andere Anschluss an die zuvor beschriebene Auswerteschaltung angeschlossen wird. Eine solche Schaltung ist auch für die Auswertung von Thermopiles geeignet.

Für beide Verfahren ist es vorteilhaft, wenn das digitale integrierende Filter als ein Aufwärts-/Abwärtszähler realisiert wird, der in Messphasen in einem vorgegebenen oder programmierbaren Takt zählt. Die Zählrichtung wird dabei vorzugsweise durch den Ausgang des Komparators festgelegt. Auch die Schrittweite dieser Zählung und die zeitlichen Abstände, in denen eine Zählung erfolgt, können konstant und vorgegeben oder programmierbar sein. In manchen Anwendungsfällen hat es sich bewährt, die Schrittweite der Zählung vom Zählerstand selbst abhängig zu machen, um ein Über- oder Unterlaufen und damit eine totale Funktionsuntüchtigkeit zu vermeiden.

Überschreitet der Zählerstand einen kritischen oberen Wert, so kann dies beispielsweise detektiert werden und ein Verlassen des Messzustands und ein Aktivieren des Entladezustands des Detektorelementes bewirken. Dies ist insbesondere bei der einphasigen Variante sinnvoll, da diese in der Lage ist, den absoluten Pegel eines Eingangssignals zu messen. Der Ausgang des digitalen integrierenden Filters stellt den Messwert dar.

In jedem Fall ist es jedoch noch zweckmäßig, dem digitalen integrierenden Filter ein weiteres digitales Filter (DF) nachzuordnen, bevor der Messwert Verwendung findet. Dies unterdrückt die Quantisierungsfehler ab einer Grenzfrequenz.

Es kann gezeigt werden, dass der Quantisierungsfehler bei einer Frequenz von 0Hz im Störspektrum null wird und für unendlich hohe Frequenzen gegen einen endlichen Wert strebt. Die Grenzfrequenzen hängen dabei wesentlich von den besagten Lastkapazitäten (C₁, C₂) und dem Widerstand (R_{M}) des Stromteilers ab und können damit gut eingestellt werden.

Selbstverständlich ist es sinnvoll, wesentliche Teile dieses Verfahrens in einem Signalprozessor ablaufen zulassen. Nur die Eingangsstufen dürften dann in speziell ausgeführter Elektronik erstellt werden. Eine solche Vorrichtung ist dann in der Lage, das oben beschriebene Verfahren durchzuführen.

Im Folgenden wird die Erfindung anhand der beiliegenden Figuren erläutert:
Figur 1 zeigt die grundsätzlichen Blöcke einer erfindungsgemäßen Vorrichtung eines passiven Infrarot-Detektors. Die Vorrichtung besteht aus einem passiven Infrarot-Detektor (PIR), der mit dem Entladenetzwerk R_{G} gekoppelt ist. Die Aufgabe dieses Entladenetzwerks ist es, Aufladungen des PIR-Detektors zu beseitigen und den PIR-Detektor in einem für den nachfolgenden Analog-zu-Digital-Wandler günstigen Arbeitspunkt zu halten, ohne die Dynamik des Systems zu belasten. Der Analog-zu-Digital-Wandler wandelt das Signal des Entladenetzwerks in ein erstes digitales Signal auf einem Bus T mit einer ersten Busbreite (Anzahl Bits) um. Ein nachfolgendes digitales Filter (DF) filtert das Signal auf dem ersten Bus T und gibt über einen Ausgangsbus (Out) die Daten mit einer größeren Auflösung aus. Daher besitzt der Ausgangsbus Out typischerweise eine größere Busbreite als der erste Bus T.
Figur 2 zeigt das nicht beanspruchte Ersatzschaltbild eines passiven Infrarot-Detektors (PIR) mit Ersatzstromquelle (I_{PIR}) und einer Serienschaltung von parasitärem Detektorkapazität (C_{PIR}) und zugehörigem Verlustwiderstand R_{PIR_c} sowie den Innenwiderstand der Ersatzstromquelle (R_{PIR}). Dieser Innenwiderstand der Stromquelle (R_{PIR}) liegt parallel zur Stromquelle (I_{PIR}) und ist typischerweise sehr hoch. Eine zu große Belastung des Detektors lässt daher die Ausgangsspannung zusammenbrechen.

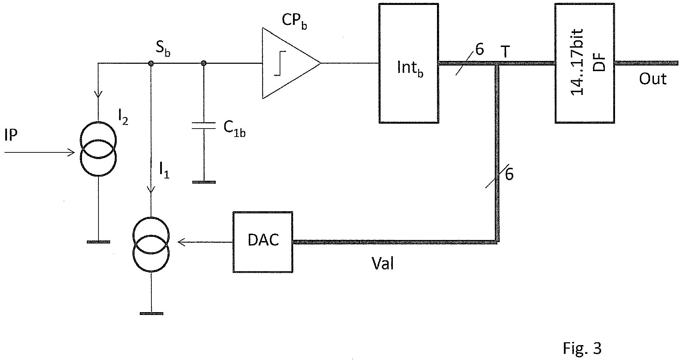

Figur 3 zeigt eine einphasige Version des Analog-zu-Digital-Wandlers (ADC) aus Figur 1. Eine erste gesteuerte Stromquelle (I₁) (auch als weitere Stromquelle bezeichnet) wird durch den Rückkoppelpfad gesteuert und speist in den ersten Knoten (Sb) ein. Eine zweite gesteuerte Stromquelle (I₂) (auch als Stromquelle bezeichnet) wird durch einen Ausgang des passiven Infrarot-Detektors gesteuert und speist ebenfalls in den ersten Knoten (S_{b}) ein. Die Summe der beiden Stromquellenströme lädt eine Kapazität (C_{1b}) auf oder entläd diese. Ist der Regelkreis stabil, so liefert die zweite Stromquelle (I₂) im Vergleich zur ersten _Stromquelle (I₁) einen im Vorzeichen unterschiedlichen, jedoch betragsgleichen Strom. Der Komparator (CP_{b}) ist mit seinem Eingang mit diesem Kondensator (C_{1b}) verbunden und vergleicht den Spannungswert an diesem Kondensator und damit am ersten Knoten (S_{b}) mit einem internen Vergleichswert. Der Auf-/Abzähler (Int_{b}) zählt nun in diesem Beispiel mit jedem Systemtakt entweder um eins aufwärts oder um ein abwärts, und zwar je nachdem, ob der Eingang des Komparators (CP_{b}) über oder unter der Schaltschwelle des Komparators (CP_{b}) liegt. Sechs Bit des Zählerstandes des Auf- / Abzählers (Int_{b}) werden beispielsweise für die Rückkopplung verwendet. In diesem Beispiel werden diese sechs Bit durch einen Digital-zu-Analog-Wandler (DAC) in ein analoges Signal gewandelt, das die weitere Stromquelle (I₁) steuert.
   Ein digitales Filter (DF) filtert den Zählerstand des Auf-Ab-Zählers (Int_{b}) zum Ausgangssignal (Out), welches der Ausgangsbus des digitalen Filters (DF) ist.

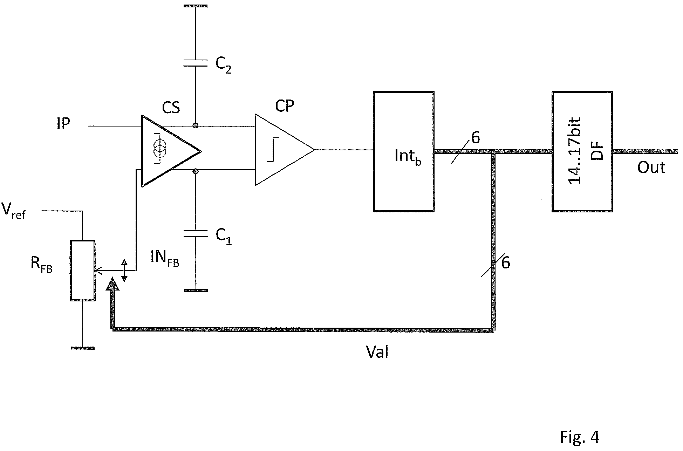

Figur 4 zeigt ebenfalls eine einphasige Version des Analog-zu-Digital-Wandlers (ADC) aus Figur 1. Allerdings ist anstelle der steuerbaren Stromquelle die eine Quelle des einen Bezugssignals nun so realisiert, dass der Zählerstand (Val) des Auf-/Abzählers (Int_{b}) nun den Abgriff (IN_{FB}) an einer Widerstandskaskade (R_{FB}) aus einzelnen Widerständen (nicht gezeichnet) steuert. Dieser Abgriff kann dann einem Differenz-Transconduktanz-Verstärker mit Stromausgang (CS) zugeführt werden. Die Stromausgänge laden und entladen jeweils einen Kondensator (C₁, C₂). Die dabei auftretenden Spannungen an den Kondensatoren (C₁, C₂) werden durch einen Komparator (CP) miteinander verglichen, der wiederum den Auf-/Abzähler (Int_{b}) steuert.

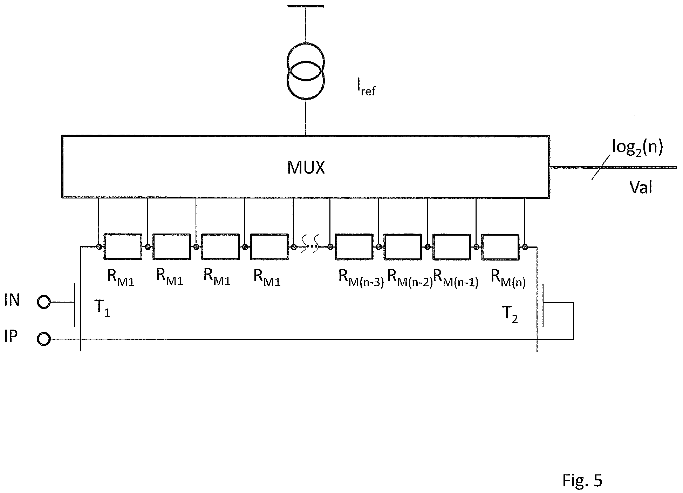

Figur 5 zeigt einen steuerbaren Stromteiler als Teil einer erfindungsgemäßen Differenzstufe bestehend aus der Widerstandskette von n Widerständen R_{M1} bis R_{Mn}, die typischerweise aber nicht notwendigerweise identisch ausgeführt werden. Von den in diesem Beispiel n+1 Abgriffen der Widerstandskette wird durch einen analogen Multiplexer (MUX) einer der Abgriffe mit der Betriebsstromquelle (I_{ref}) verbunden. Die Busbreite des Steuerbusse (Val) des analogen Multiplexers (Mux) muss dabei ausreichend gewählt werden und dürfte typischerweise größer als der Logarithmus von n zur Basis 2 sein. Der Stromteiler, die Stromquelle und die Transistoren (T₁, T₂) bilden eine erfindungsgemäße Differenzstufe.

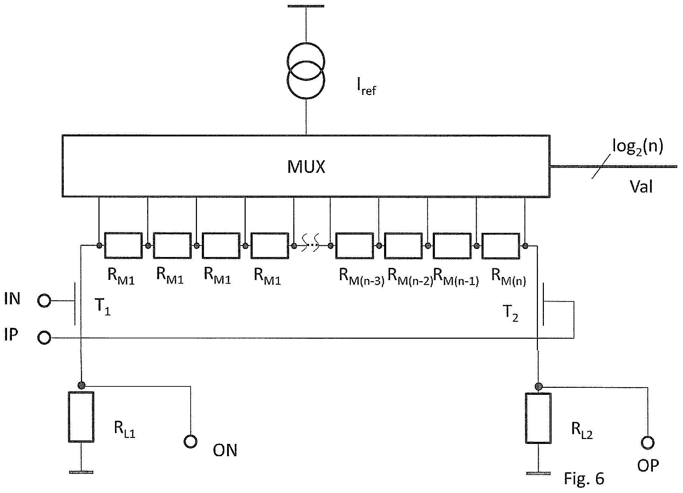

Figur 6 zeigt die Differenzstufe aus Figur 5 mit zwei Arbeitswiderständen (R_{L1}, R_{L2}). Es ist offensichtlich, dass die Stromteilerwiderstände (R_{M1} bis R_{Mn}) zu einer unterschiedlichen Stromgegenkopplung für die beiden Zweige des Differenzverstärkers führen. Diese unterschiedliche Stromgegenkopplung wird durch das Steuersignal (Val) eingestellt. In diesem Beispiel sind zwei beispielhafte Ausgänge (ON, OP) gezeigt.

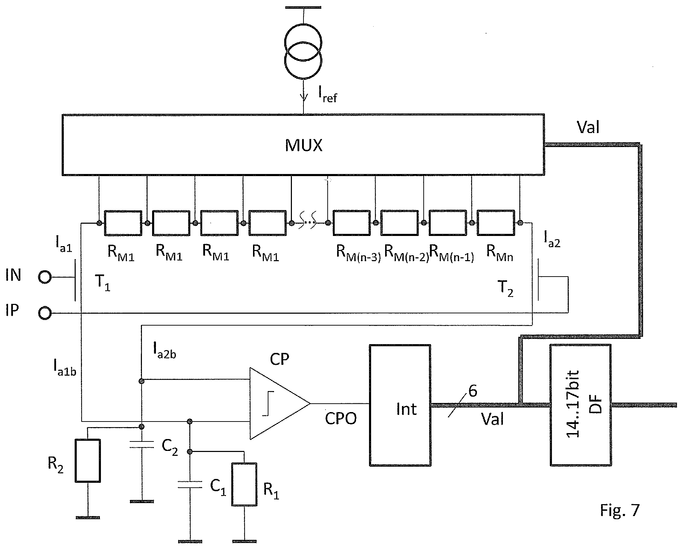

Figur 7 zeigt die Differenzstufe aus Figur 5 als Teil einer Konstruktion entsprechend Figur 3. Anstelle der Arbeitswiderstände (R_{L1}, R_{L2}) aus Figur 6 sind je ein Kondensator (C₁, C₂) parallelgeschaltet mit einem Arbeitswiderstand (R₁, R₂) eingesetzt. An den Anschlüssen IN und IP wird der passive Infrarotsensor (PIR) entsprechend den Figuren 1 und 2 angeschlossen.

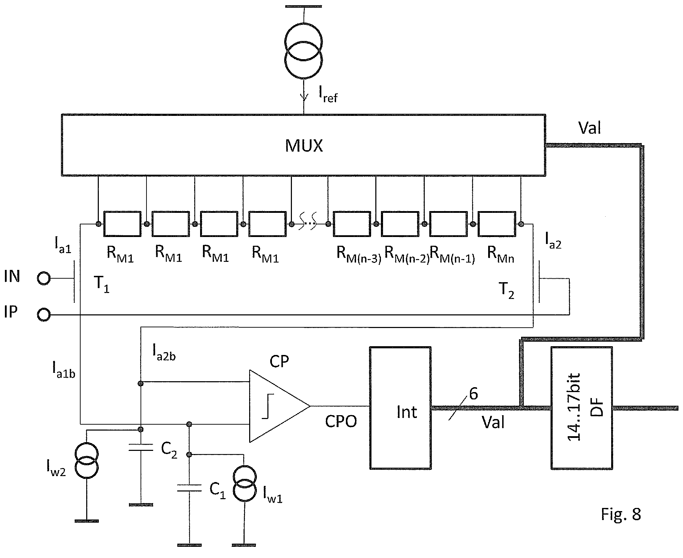

Figur 8 entspricht Figur 7 mit dem Unterschied, dass die Widerstände (R₁, R₂) durch reale Stromquellen (I_{w1}, I_{W2}) ersetzt sind, was insofern von Vorteil ist, als die Stromquellen (I_{W1}, I_{W2}) einen erhöhten differentiellen Widerstand aufweisen. Bei der Realisierung als integrierte Halbleiterschaltung stellt diese Konstruktion eine gegen parametrische Schwankungen robuste Lösung dar. Die Konstruktion ist sehr einfach und verbraucht aus diesem Grund nur sehr wenig Strom. Dabei weist sie gleichzeitig einen sehr hohen Eingangswiderstand auf. Da die Source-Anschlüsse durch die Gegenkopplung über den Stromteiler den jeweiligen Gate-Spannungen (im Mittel) folgen, schwanken die Gate-Source-Spannungen nicht. Daher sind die komplexen Eingangsimpedanzen sehr hoch. Die Gate-Source-Kapazitäten müssen nicht wesentlich umgeladen werden. Das Quantisierungsrauschen des Analog-zu-Digital-Wandlers wird mit steigender Anzahl n der Widerstände R_{Mi} geringer. Die zuvor genannten Punkte stellen wesentliche Vorteile der Erfindung gegenüber dem Stand der Technik dar.

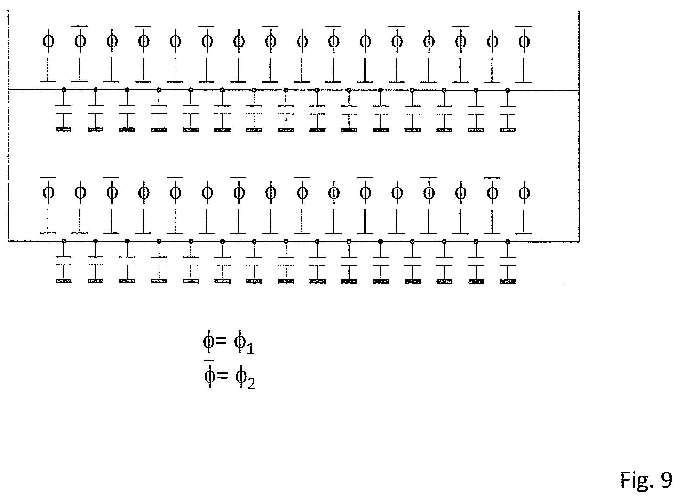

Figur 9 zeigt eine mögliche Realisierung der Entladeschaltung R_{G} aus Figur 1 bzw. der Entladewiderstände (R_{dis_1}, R_{dis_2}) in Figur 2. Diese Widerstände müssen einen relativ hohen Widerstandswert aufweisen und sollten typischerweise möglichst gleich sein. Die in dieser Figur 8 gezeigte Switch-Capacitor-Realisierung arbeitet mit Transfergattern, die wechselweise mit einem von zwei nicht überlappenden Takten (φ1, φ₂) geschaltet werden. Abgesehen von der Nichtüberlappung ist der eine Takt der inverse des anderen Taktes. Die Speicherkapazitäten befördern dabei jeweils eine gewisse Ladungsmenge mit jedem Halbtakt um einen Knoten weiter. Figur 9 zeigt zwei Stränge. Die Stränge werden um jeweils einen Halbtakt versetzt betrieben. Hierdurch kommt es zu einem kontinuierlichen Ladungsabfluss. Werden die Takte abgeschaltet, was insbesondere in den Messphasen vorzugsweise der Fall ist, so fließt kein Strom mehr. Der so gebildete Arbeitswiderstand wird hochohmig. Wird der Takt der Entladung als von der Eingangsspannung abhängig gewählt, so kann die Entladung beispielsweise so gesteuert werden, dass sie bei größeren Eingangsspannungsdifferenzen größer und bei kleineren Eingangsspannungsdifferenzen kleiner ist und in einem vorgebbaren Bereich verschwindet.

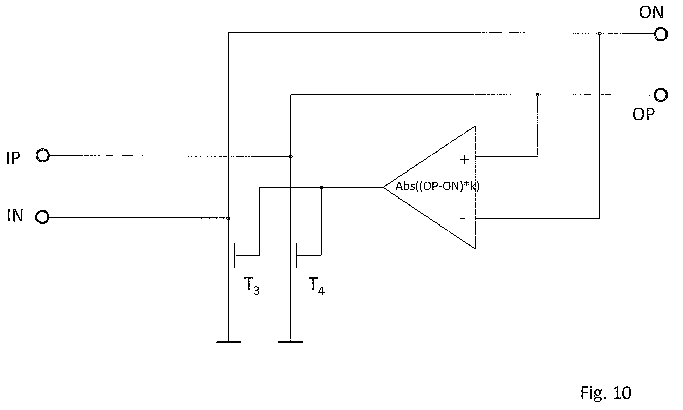

Figur 10 zeigt ein weiteres Beispiel eines Entladenetzwerks R_{G} als aktives Netzwerk. Die Transistoren T₃ und T₄ werden in Abhängigkeit von der Differenz der Eingangsspannung zwischen IP und IN leitend geschaltet. Der Differenzverstärker bildet dabei den Betrag der Differenz an seinen Eingängen OP und ON und öffnet die Transistoren T₃ und T₄ entsprechend einer vorgegebenen Funktion in Abhängigkeit von diesem Differenzbetrag. Da die Kennlinie der Transistoren nicht linear ist, führt dies bei einem verschwindenden Differenzbetrag der Eingangsspannung zwischen IP und IN zu einem verschwindenden Leitwert der Transistoren T₃ und T₄.

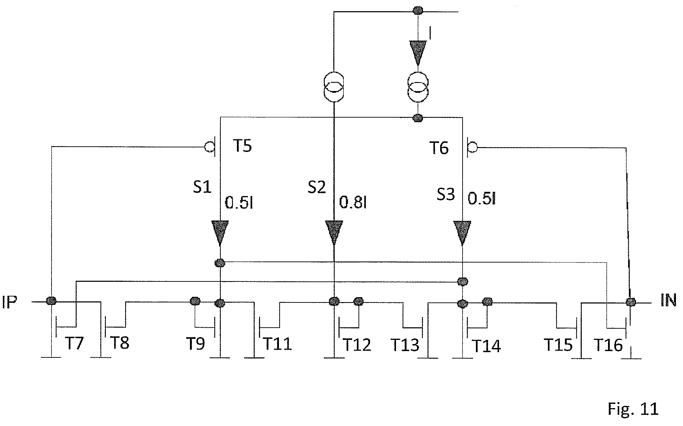

Figur 11 zeigt eine weitere mögliche Implementierung eines Entladenetzwerkes R_{G}. Eine erste Stromquelle speist mit dem Strom I jeweils zur Hälfte die MOS-Dioden T9 und T14, bei denen es sich um als Dioden beschaltete Transistoren handelt. Der Strom durch die MOS-Diode T14 wird durch den Transistor T13 vermindert. Der Strom durch die MOS-Diode T9 wird durch den Transistor T11 vermindert. Eine zweite Stromquelle liefert einen Strom, der typischerweise 80% des Wertes des Stroms der ersten Stromquelle beträgt.
   Da der Transistor T11 mit der MOS-Diode T12 einen Stromspiegel bildet und der Transistor T13 mit der gleichen MOS-Diode T12 einen Stromspiegel bildet, fließt ein auf typischerweise 80% des Stromes I bezogener Offsetstrom von den Strömen durch den Transistor T9 bzw. durch den Transistor T14.
   Sind die Eingänge IP und IN ungleich vorgespannt, so führt dies zu einer unausgeglichenen Stromaufteilung durch die Differenzstufe aus den Transistoren T5 und T6. Dies wirkt sich dann dahingehend aus, dass zusätzlicher Strom durch die MOS-Dioden T9 oder T14 fließen kann, was zu einer Öffnung der Transistoren T7 und T15 oder T8 und T16 führt und somit zu einer Entladung der Eingangsknoten IP und IN.

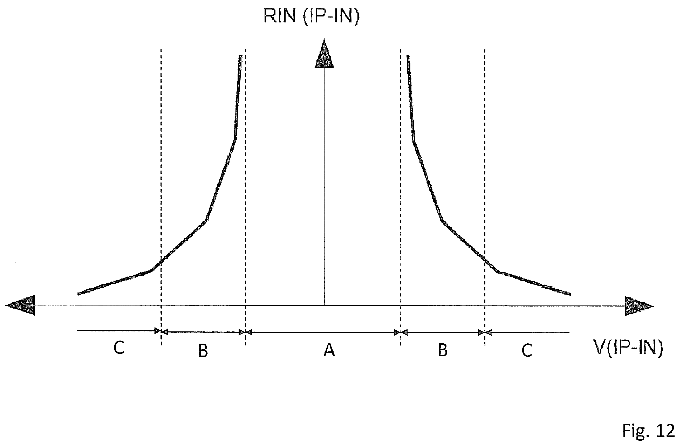

Figur 12 zeigt eine beispielhafte Entladewiderstandskennlinie einer Schaltung gemäß Figur 11. Durch geeignete Wahl der Stromspiegel- und Transistorverhältnisse kann erreicht werden, dass die Kennlinie des Eingangswiderstands einen extrem hochohmigen Bereich A, in dem der Eingangswiderstand praktisch nur vom Leckstrom der Schaltung bestimmt wird, und einen Bereich B, in dem eine Spannungsbegrenzung einsetzt, und einen Bereich C aufweist, in dem der Eingangswiderstand sehr niederohmig ist.

Die beiden Anschlüsse werden somit durch diese elektrische Schaltungsanordnung entladen, deren Äquivalentwiderstand bei einem Arbeitspunkt im Bereich A signifikant größer ist als bei Arbeitspunkt in den Bereichen B oder C.

Dies ermöglicht es, einen passiven Infrarot-Detektor so zu betreiben, dass die elektrischen Anschlüsse durch einen Strompfad entladen werden, wenn die Spannung außerhalb eines vorbestimmten Bereiches A liegt. Dabei hängt der Entladestrom durch diese Schaltung von der Eingangsspannung zwischen den elektrischen Anschlüssen IP und IN ab. In dem durch die Dimensionierungen vorgegebenen Bereich A der Eingangsspannung verschwindet der Entladestrom bis auf den Leckstrom der Transistoren. Dabei steigt der Entladestrom mit steigendem Betragsabstand der Eingangsspannung außerhalb dieses Bereiches A an. Der Eingangswiderstand RIN(IP-IN) hängt von der Differenzspannung V(IP-IN) zwischen den Eingängen IP und IN des Netzwerks R_{G} ab. Der hier betrachtete Eingangswiderstand kann dabei sowohl als zwischen den Anschlüssen IP und IN befindlich angenommen werden als auch zwischen einem Anschluss IP oder IN auf der einen und dem Bezugspotenzial, beispielsweise Masse, auf der anderen Seite. Das Widerstandsverhalten sollte vorzugsweise in jedem dieser beiden Betrachtungsfälle ähnlich demjenigen gemäß Figur 12 sein.

Die Erfindung lässt sich ferner alternativ durch eine der nachfolgend genannten Merkmalsgruppen umschreiben, wobei die Merkmalsgruppen beliebig miteinander kombinierbar sind und auch einzelne Merkmale einer Merkmalsgruppe mit ein oder mehreren Merkmalen einer oder mehrerer anderer Merkmalsgruppen und/oder einer oder mehrerer der zuvor beschriebenen Ausgestaltungen kombinierbar sind.
1. Verfahren zum Betreiben eines passiven Infrarot-Detektors (PIR) wobei
   - jeder der Ausgänge des besagten passiven Infrarot-Detektors (PIR) mit dem Steuereingang jeweils eines zugeordneten Eingangstransistors (T., , T2) verbunden ist und
   - jeweils je ein Kontakt jedes dieser Eingangstransistoren (T., , T2) mit einem zugehörigen Stromteilerausgang (I ai i Ia2) eines steuerbaren Stromteilers (MUX, RM1bis RMn) verbunden ist und
   - der besagte Stromteiler (MUX, RM1bis RMn) den Strom einer Referenzstromquelle (Iref) in Abhängigkeit von einem Steuereingang (Val) auf die Stromteilerausgänge (Ia1, Ia2) aufteilt und
   - die anderen Kontakte der Transistoren (T1 7T2) jeweils mit je einem integrierenden Filter und/oder einer Kapazität (C-1, C2) verbunden sind und
   - die Ausgangswerte dieser integrierenden Filter und/oder Kapazitäten (C-I, C2) durch mindestens einen Komparator (CP) miteinander verglichen werden und
   - das Komparatorausgangssignal (CPO) dieses Komparators (CP) mindestens ein digitales integrierendes Filter (Int) steuert und
   - der Steuereingang (Val) des besagten Stromteilers (MUX, RM1bis RMn), der den Strom einer Referenzstromquelle (Iref) aufteilt, direkt oder indirekt vom Zahlenwert des digitalen integrierenden Filters (Int) abhängt.
2. Verfahren zum Betreiben eines passiven Infrarot-Detektors (PIR) wobei
   - mindestens ein Ausgang des passiven Infrarot-Detektors (IP, IN) mindestens eine Stromquelle (I₂) steuert und
   - diese Stromquelle (I₂) Strom in einen ersten Konten (Sb) einspeist und
   - dieser Knoten (Sb) über ein integrierendes Filter (C1 ) mit dem Eingang eines Komparators (CP ) verbunden ist und
   - der Ausgang dieses Komparators (CP ) mindestens ein digitales integrierendes Filter (Intb) direkt oder indirekt steuert und
   - der Ausgangs dieses digitalen integrierenden Filters zumindest einen Digital-Analog-Wandler (DAC) ansteuert und
   - der Ausgang dieses Digital-Analog-Wandlers zumindest eine weitere Stromquelle (I-₁) steuert und
   - diese weitere Stromquelle (I-₁) ihren Strom ebenfalls in den ersten Knoten (S ) einspeist.
3. Verfahren zum Betreiben eines passiven Infrarot-Detektors (PIR) nach den Ziffern 1 oder 2
   - wobei das digitale integrierende Filter ein Aufwärts-/Abwärtszähler (Int, Intb) ist und
   - das Komparatorausgangssignal (CPO) eines Komparators (CP) mindestens diesen Aufwärts-/Abwärtszähler (Int) in seiner Zählrichtung steuert und
   - wobei der Aufwärts-/Abwärtszähler (Int) in vorgegebenen und/oder programmierbaren Zeitabständen seinen Zahlenwert inkrementiert oder dekrementiert.
4. Verfahren zum Betreiben eines passiven Infrarot-Detektors (PIR) nach einer oder mehrerer der Ziffern 1 bis 3 wobei
   - dem digitalen integrierenden Filter ein weiteres digitales Filter (DF) nachgeordnet ist.
5. Verfahren zum Betreiben eines passiven Infrarot-Detektors wobei
   - mindestens ein Verfahren nach einer der Ziffern 1 bis 4 verwendet wird.
6. Differenzverstärkerstufe
   - wobei sie eine Referenzstromquelle (Iref) aufweist und
   - einen Widerstand (RM1 bis RMn) aufweist und
   - wobei dieser Widerstand (RM1bis RMn) einen steuerbaren Abgriff aufweist, der mit der besagten Referenzstromquelle (Iref) verbunden ist und
   - wobei ein Anschluss des Widerstands (RM1bis RMn) mit einem ersten Transistor (T.,) verbunden ist und wobei der andere Anschluss des Widerstands (RM1bis RMn) mit einem zweiten Transistor (T2) verbunden ist und
   - wobei die Steuerung des Abgriffs durch eine externe Größe steuerbar ist und
   - wobei die Steuerelektrode des ersten Transistors (T-,) und die Steuerelektrode des zweiten Transistors (T2) den differentiellen Eingang bilden und
   - wobei jeder Transistor (T1 ?T2) mit seinem dritten Anschluss mit einem Arbeitswiderstand (R1 ?R2, C1 7C2, IW., , IW2) verbunden ist, wobei es sich um einen differentiellen Arbeitswiderstand handeln kann.
7. Differenzverstärkerstufe nach Ziffer 6
   - wobei der steuerbare Widerstand einen analogen 1 :(n- 1 ) Multiplexer oder einen analogen 1 :n Multiplexer, oder einen analogen 1 :(n + 1 ) Multiplexer (MUX) umfasst, der mit dem einzelnen Ausgang, der den Abgriff des steuerbaren Widerstandsdarstellt, mit der besagten Referenzstromquelle (Iref) verbunden ist und
   - wobei der steuerbare Widerstand eine Widerstandkette aus n Widerständen (RM1bis RMn) umfasst und
   - wobei jeder der (n - 1 ) Knoten zwischen je zwei der n Widerstände (RM1bis RMn) mit einem Ein-/ Ausgang des analogen Multiplexers (MUX) verbunden ist und
   - wobei im Falle eines 1 :n Multiplexers (MUX) zusätzlich das Ende oder der Anfang der Widerstandskette aus den Widerständen (RM1bis RMn) mit dem Multiplexer (MUX) verbunden ist und
   - wobei im Falle eines 1 :(n + 1 ) Multiplexers (MUX) zusätzlich das Ende und der Anfang der Widerstandskette aus den Widerständen (RM1bis RMn) mit dem Multiplexer (MUX) verbunden sind und
   - wobei der Anfang der Widerstandskette aus den Widerständen (RM1bis RMn) mit mindestens einem ersten Transistor (T.,) verbunden ist und
   - das Ende der Widerstandskette aus den Widerständen (RM1bis RMn) mit mindestens einem zweiten Transistor (T.|) verbunden ist und
8. Δ∑-Wandler zum Umwandeln eines differentiellen analogen Eingangssignals in ein digitales Signal
   - wobei die Vorrichtung einen Differenzverstärker nach einer oder mehrerer der Ziffern 6 bis 7 umfasst und
   - wobei die Ausgänge dieses Differenzverstärkers jeweils mit einem integrierenden Filter und/oder jeweils einem Kondensator verbunden sind und
   - wobei die Ausgänge jedes integrierenden Filters und/oder jedes Kondensators mit einem Komparator verbunden sind und
   - wobei der Ausgang des Komparators mit einem digitalen integrierenden Filter und/oder einem Auf-Abzähler verbunden sind, der in vorgegebenen und/oder programmierten Zeitabständen zumindest zeitweise seinen Zählerstand in Abhängigkeit vom Ausgang des Komparators inkrementiert oder dekrementiert und - wobei der Ausgang dieses digitalen integrierenden Filters und/oder des Auf-/Abzählers für die Steuerung des steuerbaren Widerstands verwendet wird und
   - wobei der Ausgang diese digitalen Filters direkt und/oder nach Filterung durch ein weiteres digitales Filter als Ausgangswert des Δ∑-Wandlers verwendet wird.
9. Δ∑-Wandler zum Umwandeln eines differentiellen analogen Eingangssignals nach Ziffer 8
   - wobei der Δ∑-Wandler einen Steuereingang besitzt, mittels dessen die Integration durch das digitale integrierende Filters und/oder das Auf- oder Abzählen durch den Auf-/Abzähler unterbunden oder ermöglicht werden kann.
10. Vorrichtung zum Betreiben eines passiven Infrarot-Detektors (PIR)
   - wobei die Vorrichtung ein Verfahren nach einer oder mehrerer der vorhergehenden Ziffern 1 bis 5 durchführt und/oder
   - wobei die Vorrichtung eine Differenzstufe nach Ziffer 6 oder 7 und/oder einen Δ∑-Wandler nach Ziffer 8 oder 9 enthält.
11. Vorrichtung zum Betreiben eines passiven Infrarot-Detektors (PIR)
   - wobei der passive Infrarot-Detektor (PIR) über ein Entladenetzwerk (RG) mit einem Analog-zu-Digital-Konverter (ADC) verbunden ist und
   - wobei dem Ausgang (T) des Analog-zu-Digital-Konverters (ADC) ein digitales Filter (DF) nachgeschaltet ist und
   - wobei die Busbandbreite des Ausgangs des digitalen Filters (DF) größer ist als die Busbandbreite des Ausgangs (T) des Analog-zu-Digital-Konverters (ADC).

**Bezugszeichenliste**

| | |
|---|---|
| A | Spannungsbereich, in dem das Entladenetzwerk hochohmig ist |
| ADC | Analog zu Digital Wandler |
| B | Spannungsbereich, in dem das Entladenetzwerk eine mittlere Leitfähigkeit aufweist |
| C | Spannungsbereich, in dem das Entladenetzwerk eine höhere Leitfähigkeit aufweist |
| C₁ | Erste Kapazität |
| C_{1b} | Erstes integrierendes Filter (dritte Kapazität) |
| C₂ | Zweite Kapazität |
| CP | Komparator |
| CP_{b} | Komparator |
| CPO | Komparatorausgang |
| C_{PIR} | Parasitäre Kapazität des PIR-Sensors , |
| CS | Stromausgang des Differenz-Transconduktanz-Verstärkers |
| DAC | Digital-zu-Analog-Converter |
| DF | Nachgeschaltetes digitales Filter |
| I₁ | Weitere Stromquelle |
| I₂ | Stromquelle |
| Iₐ₁ | Erster Stromteilerausgang |
| Iₐ₂ | Zweiter Stromteilerausgang |
| IN | Erster Anschluss für den PIR Sensor |
| Int | Integrierendes Filter (im einfachsten Fall ein Auf-/Ab-Zähler) |
| Int_{b} | Integrierendes Filter (im einfachsten Fall ein Auf-/Ab-Zähler) |
| IN | Zweiter Anschluss für den PIR-Sensor |
| IN_{FB} | Abgriff an einer Widerstandskaskade (R_{FB}) aus einzelnen Widerständen |
| I_{PIR} | Stromquelle des Ersatzschaltbildes des PIR-Sensors |
| I_{ref} | Referenzstromquelle |
| IW₁ | Erste, als Arbeitswiderstand benutzte Stromquelle |
| IW₂ | Zweite, als Arbeitswiderstand benutzte Stromquelle |
| | |
| | |
| MUX | Analoger 1:(n-1) oder 1:n oder 1:(n+1) Multiplexer. Dabei hat n vorzugsweise einen Wert größer als drei und/oder 4. Besonders vorteilhaft sind Werte von n=(2^{m}-2) mit m>2 oder m>3. Im vorliegenden Beispiel ist m=6 gewählt. |
| ON | Erster Ausgang der Differenzstufe |
| OP | Zweiter Ausgang der Differenzstufe |
| Out | Ausgangsbus des digitalen Filters DF (=nachgeschaltetes Filter DF) |
| φ₁ | Erster Takt des SC-Netzwerks zur Bildung eines Entladewiderstands |
| φ₂ | Zweiter Takt des SC-Netzwerks zur Bildung eines Entladewiderstands. Der Takt ist im Wesentlichen invers zu φ₁ und überlappt sich mit φ₁ nicht. |
| PIR | PIR-Sensor |
| R₁ | Erster Arbeitswiderstand |
| R₂ | Zweiter Arbeitswiderstand |
| R_{dis_1} | Erster ungünstiger Entladewiderstand im Stand der Technik. Dieser führt zu einer Belastung des Ausgangs IP und zu einer Reduzierung des Ausgangssignals. In der erfindungsgemäßen Vorrichtung wird dieser Widerstand moduliert. |
| R_{dis_2} | Zweiter ungünstiger Entladewiderstand im Stand der Technik. Dieser führt zu einer Belastung des Ausgangs IN und zu einer Reduzierung des Ausgangssignals. In der erfindungsgemäßen Vorrichtung wird dieser Widerstand moduliert. |
| R_{FB} | Widerstandskaskade aus einzelnen Widerständen. Ein Steuersignal (Val) steuert den Abgriff des Ausgangssignals IN_{FB.} Die Widerstandskaskade verhält sich also wie ein durch die Größe Val gesteuertes Potentiometer. Die Realisierung erfolgt ähnlich der Realisierung des Stromteilers aus Multiplexer MUX und Widerstandskaskade R_{M1} bis R_{Mn}. |
| R_{G} | Entladenetzwerk. Diese Entladenetzwerk verhindert eine Aufladung des PIR-Sensors sowohl gegen Masse als auch der Anschlüsse des PIR-Sensors gegeneinander. |
| RIN(IP-IN) | Von der Differenzspannung V(IP-IN) zwischen den Eingängen IP und IN abhängiger Eingangswiderstand des Netzwerks R_{G}. |
| R_{L1} | Erster Arbeitswiderstand |
| R_{L2} | Zweiter Arbeitswiderstand |
| R_{M} | Widerstand des Stromteilers. Es handelt sich um den Summenwert der Widerstandskette R_{M1} bis R_{Mn} aus n Widerständen. |
| R_{M1} bis R_{Mn} | Widerstände der Widerstandskette aus n Widerständen des Stromteiles der erfindungsgemäßen Differenzstufe |
| R_{PIR} | Innenwiderstand des PIR-Sensors PIR, der parallel zu den Ausgängen des PIR Sensors liegt (siehe Fig. 1) |
| R_{PIR_C} | Serienwiderstand der parasitären Kapazität C_{PIR}. |
| S_{b} | Erster Knoten |
| T | ADC Ausgang mit typischerweise geringerer Bit-breite als der Bus Out |
| T₁ | Erster Transistor der Differenzstufe |
| T₂ | Zweiter Transistor der Differenzstufe |
| T₃ | Dritter Transistor |
| T₄ | Vierter Transistor |
| T5 bis T16 | Transistoren eines beispielhaften weiteren Entladenetzwerks. |
| Val | Steuereingang des Multiplexers MUX |
| V(IP-IN) | Spannung zwischen den Ausgängen des PIR-Sensors und damit zwischen den Eingängen des Entladenetzwerks R_{G} |
| Vref | Referenzspannung |

## Patentansprüche

1. Verfahren zum Betreiben eines passiven Infrarot-Detektors (PIR) wobei
- zumindest einer der Anschlüsse des passiven Infrarot-Detektors (PIR) durch eine elektrische Schaltungsanordnung entladen wird, deren Äquivalentwiderstand zumindest in einem Arbeitspunkt einen Widerstandswert größer als 1 MOhm und/oder größer als 10 MOhm und/oder größer als 100 MOhm und/oder größer als 1 GOhm und/oder größer als 10 GOhm besitzt.

2. Verfahren zum Betreiben eines passiven Infrarot-Detektors (PIR) nach Anspruch 1 wobei
- zumindest zwei der Anschlüsse des passiven Infrarot-Detektors (PIR) durch eine elektrische Schaltungsanordnung entladen werden, deren Äquivalentwiderstand in zumindest einem Arbeitspunkt jeweils einen Widerstandswert größer als 1 MOhm und/oder größer als 10 MOhm und/oder größer als 100 MOhm und/oder größer als 1 GOhm und/oder größer als 10 GOhm besitzen.

3. Verfahren zum Berteiben eines passiven Infrarot-Detektors (PIR) nach einem oder mehreren der vorhergehenden Ansprüche wobei
- zumindest einer der Anschlüsse des passiven Infrarot-Detektors (PIR) durch eine elektrische Schaltungsanordnung entladen wird, deren Äquivalentwiderstand zumindest in einem Arbeitspunkt größer als in einem anderen Arbeitspunkt ist.

4. Verfahren zum Betreiben eines passiven Infrarot-Detektors (PIR) nach einem oder mehreren der vorhergehenden Ansprüche wobei
- zumindest eine der besagten elektrischen Schaltungsanordnungen zur Entladung mindestens eines der Anschlüsse des passiven Infrarot-Detektors (PIR) zumindest teilweise aus einer Switched-Capacitor-Schaltung besteht.

5. Verfahren zum Betreiben eines passiven Infrarot-Detektors (PIR) nach Anspruch 4 wobei
- zumindest die besagte Switched-Capacitor-Schaltung mit zwei nicht überlappenden Takten (ϕ-I, ϕ₂) betrieben wird.

6. Verfahren zum Betreiben eines passiven Infrarot-Detektors (PIR)
- wobei zumindest einer der elektrischen Anschlüsse des passiven Infrarot-Detektors (PIR) durch einen Strompfad entladen wird und
- wobei der Strom durch diesen Strompfad von der Eingangsspannung zwischen den elektrischen Anschlüssen des passiven Infrarot-Detektors (PIR) und/oder von der Spannung zwischen zumindest diesem elektrischen Anschluss des passiven Infrarot-Detektors (PIR) und einem Bezugspotenzial abhängt und
- wobei in einem vorgegebenen ersten Bereich (A) der besagten Spannung der Strom bis auf einen Leckstrom verschwindet und
- wobei der Entladestrom mit steigendem Betraqsabstand der Eingangsspannung zwischen den elektrischen Anschlüssen passiven Infrarot-Detektors (PIR) der Entladestrom außerhalb dieses Bereiches (B, C) ansteigt und/oder größer ist als in dem besagten ersten Bereich (A).

7. Verfahren zum Betreiben eines passiven Infrarot-Detektors (PIR) nach einem oder mehreren der Ansprüche 1 bis 6 wobei
- der mittlere Äquivalentwiderstand zumindest einer elektrische Schaltungsanordnung zur Entladung zumindest eines Anschlusses des passiven Infrarot-Detektors (PIR) zu unterschiedlichen Zeitpunkten unterschiedlich ist und
- wobei, sofern der Äquivalentwiderstand von einem Takt (ϕ1 , ϕ2) abhängt, die Mittelung des Äquivalentwiderstands auf mehrere Perioden dieses Taktes bezogen ist.
